# EUROPEAN PATENT SPECIFICATION

(11) **EP 4 046 790 B1**
(45) Date of publication and mention of the grant of the patent: **31.01.2024**
(21) Application number: 22158065.7
(22) Date of filing: 22.02.2022
(51) Int. Cl.: B32B 3/02, B32B 3/04, B32B 3/06, B32B 3/18, B32B 5/18, B32B 7/12, B32B 19/02, B32B 19/04, B32B 27/30

(54) **INNOVATIVE PANEL, FOR EXAMPLE FOR MAKING DOORS OR FURNISHING ELEMENTS, AND INNOVATIVE METHOD FOR MAKING SUCH A PANEL**
INNOVATIVE PLATTE, BEISPIELSWEISE ZUR HERSTELLUNG VON TÜREN ODER EINRICHTUNGSELEMENTEN, UND INNOVATIVES VERFAHREN ZUR HERSTELLUNG EINER SOLCHEN PLATTE
PANNEAU INNOVANT, PAR EXEMPLE POUR LA FABRICATION DE PORTES OU D'ÉLÉMENTS DE MEUBLES ET PROCÉDÉ INNOVANT DE FABRICATION D'UN TEL PANNEAU

(30) Priority: 23.02.2021 IT 202100004169
(43) Date of publication of application: 24.08.2022
(73) Proprietor: M.E.P. Forniture S.r.l., 31050 Ponzano Veneto (TV) (IT)
(72) Inventor: PILLON, Enrico, 31100 Treviso (TV) (IT)
(74) Representative: Frare, Paolo

(56) References cited:
- WO-A1-2011/006918
- IT-A1- PN20 080 030

## Description

The present invention relates to an innovative panel, for example for making doors or furnishing elements, and to an innovative method for the production of such a panel.

It is currently known to ennoble panels made from relatively low-value or aesthetically unattractive materials, such as so-called "chipboard" or "MDF" panels, by coating them with films or foils of higher-value and more aesthetically pleasing materials, such as plastic, metal or wood foils.

Once coated, such panels can be used, for example, to make doors or various furnishing elements such as, but not limited to, wardrobes, tables, etc.

In general, the films or foils of higher-quality material are applied to the external surfaces of the panel of lower-quality material by means of gluing; the joining areas between the various films or foils covering the panel are usually visible in the finished product, thus compromising the overall appearance thereof.

Furthermore, possible gaps between the various contiguous films or foils covering the panel may allow the passage and/or deposit of dirt, bacteria, moisture, etc., with the consequent risk of hygiene and/or damage to the panel.

Also, the films or foils covering the panel are usually very thin, and are generally not recoverable in the event of damage, for example due to shocks, scratches, rubbing, burning, etc.

In the furnishing sector, in particular in the production of kitchen worktops, so-called "solid surface" materials are also known, which are composite materials consisting mainly of a mineral filler (usually aluminium trihydrate) bound by a polymeric matrix, for example an acrylic resin (usually polymethylmethacrylate PMMA), a polyester resin or an epoxy resin.

Furthermore, such composite materials often contain a certain amount of coloured pigments adapted to impart a certain colour.

The most commonly used "solid surface" material in the interior design sector is known with the brand Corian^{®}.

Other materials of this type are known, for example, with the brand names HI-MACS^{®}, KRION^{®}, STARON^{®}.

Solid surface-type materials are substantially non-porous and compact, and easily repairable.

Surfaces of such materials that are scratched, damaged or on which burns are present (for example cigarette burns), can be easily restored by polishing them with an abrasive object, for example an abrasive sponge or a piece of sandpaper, possibly with the aid of mild abrasive cleaners.

Solid surface materials are often marketed in the form of sheets of different colours, usually in standard thicknesses (typically 3 mm, 4 mm, 6 mm, 12 mm and 19 mm) .

The joining together of sheets of the same "solid surface" material, in order for example to obtain a larger sheet, such as a kitchen worktop, is done using special adhesives, which are generally formulated so as to be able to join together sheets made only of a specific solid surface material.

Such adhesives typically contain the same specific solid surface material (or one or more components present in such material) as the sheets to be joined, and are in a liquid state; once solidified, the adhesive joins the sheets, creating continuity therebetween.

However, the colour of the adhesive, once solidified, is generally not exactly the same as that of the sheets; the larger the layer of adhesive, the greater the possibility that the joint between the two sheets will be visible in the finished product, compromising the overall appearance of the latter.

Therefore, in order to limit the size of the layer of adhesive present between two sheets to be joined, and to reduce possible misalignments therebetween, and to ensure a perfect seal of the adhesive, it is important that the sheets are kept as close together as possible, and pressed against each other, during the solidification of the adhesive.

For this purpose, it is known to use special clamps that are attached to the two sheets to be joined and keep them pressed against each other until the adhesive therebetween has completely set.

The necessity to keep the sheets of such solid surface materials pressed together during the solidification of the adhesive discourages their use as a coating layer on panels, for example for doors or furniture; in particular, if more than one sheet of solid surface material is to be used side by side to coat the front or back surface of a panel, it is very difficult to ensure a sufficient reciprocal pressure between the various sheets placed side by side during the solidification of the adhesive placed therebetween, with the risk that such sheets are not perfectly aligned, and/or attached to each other, and/or that the overall appearance of the finished panel is compromised. The document WO 2011/006918 A1 discloses an example of a panel comprising composite material made of inorganic filler sheets. 11

The document IT PN20080030 A1 discloses a door frame made of a single sheet of composite material, made of polymeric matrix filled with mineral fillers.

The main aim of the present invention is to obtain a panel, for example for making doors or furnishing elements, which is covered, at least in its front or back surface, with two or more sheets made of a composite material comprising a mineral filler bound by a polymeric matrix, such as a material of the so-called "solid surface" type, in which such sheets are effectively attached to each other, reducing the risk that the same sheets detach, and that the joints between two contiguous sheets are visible, thus compromising the overall appearance of the finished panel.

Within this aim, another object of the invention is to obtain a panel, for example for the production of doors or furnishing elements, which can be obtained easily and quickly, thus keeping the production costs thereof low.

The aim and objects according to the present invention are achieved by a panel, for example for making doors or furnishing elements, comprising:
- a first sheet and a second sheet, made of a composite material comprising a mineral filler bound by a polymeric matrix, such first sheet and second sheet being attached to each other and to a supporting element which keeps them positioned respectively with a first external face and second external face thereof facing away from the supporting element and lying on the same lying plane, such a first sheet and second sheet respectively facing each other with a first flat face and a second flat face, such a first flat face and such a second flat face being spaced apart from each other to define a gap therebetween;
- one or more wedges made of such a composite material comprising a mineral filler bound by a polymeric matrix, interposed between the first flat face and the second flat face to close the gap, with the interposition of an adhesive,
wherein the first flat face and/or the second flat face and/or the one or more wedges are shaped so as to generate, as a result of a pressure on such one or more wedges towards the inside of the gap, in a direction of insertion along which they are inserted in such a gap, a force acting between the one or more wedges and the first and/or second flat face, having at least one component parallel to the lying plane, which pushes the one or more wedges towards the first flat face and/or the second flat face.

Advantageously, the adhesive contains or consists of the same composite material comprising a mineral filler bound by a polymeric matrix of which the first sheet, the second sheet, and the one or more wedges are made.

The aim and the objects according to the present invention are also achieved by a method for the production of a panel, for example for doors or furnishing elements, comprising the following steps:
- attaching a first sheet and a second sheet, made of a composite material comprising a mineral filler bound by a polymeric matrix, to a supporting element which keeps such a first and second sheet positioned respectively with a first external face and second external face thereof facing away from the supporting element and lying on a same lying plane;
- making between the first sheet and the second sheet a gap defined between a first flat face of the first sheet and a second flat face of the second sheet, which are spaced apart and facing each other;
- arranging one or more wedges, made of such composite material comprising a mineral filler bound by a polymeric matrix, shaped so that they can be interposed between the first and second flat face to close the gap as a whole with the interposition of an adhesive, the first flat face and/or the second flat face and/or the one or more wedges being shaped so as to generate, as a result of a pressure on such one or more wedges towards the inside of the gap, in a direction of insertion along which they are inserted into such a gap, a force acting between such one or more wedges and the first and/or second flat face, having at least one component parallel to the lying plane, which pushes the one or more wedges towards the first flat face and/or towards the second flat face;
- positioning the one or more wedges between the first and second flat faces so as to close the gap, with the interposition of an adhesive, exerting on such one or more wedges, for a certain time interval, a pressure towards the inside of the gap, having at least one component in the direction of insertion, so as to generate between the one or more wedges and the first and second flat faces a force having at least one component parallel to the lying plane, which pushes the one or more wedges towards the first flat face and/or towards the second flat face.

Advantageously, the adhesive used in the method contains or consists of the same composite material comprising a mineral filler bound by a polymeric matrix of which the first sheet, the second sheet, and the one or more wedges are made.

Other advantageous features of the panel and/or the method according to the invention are listed in the dependent claims.

The features and advantages of the present invention will be more apparent from the following description, which is to be understood as exemplifying and not limiting, with reference to the appended schematic drawings in which:

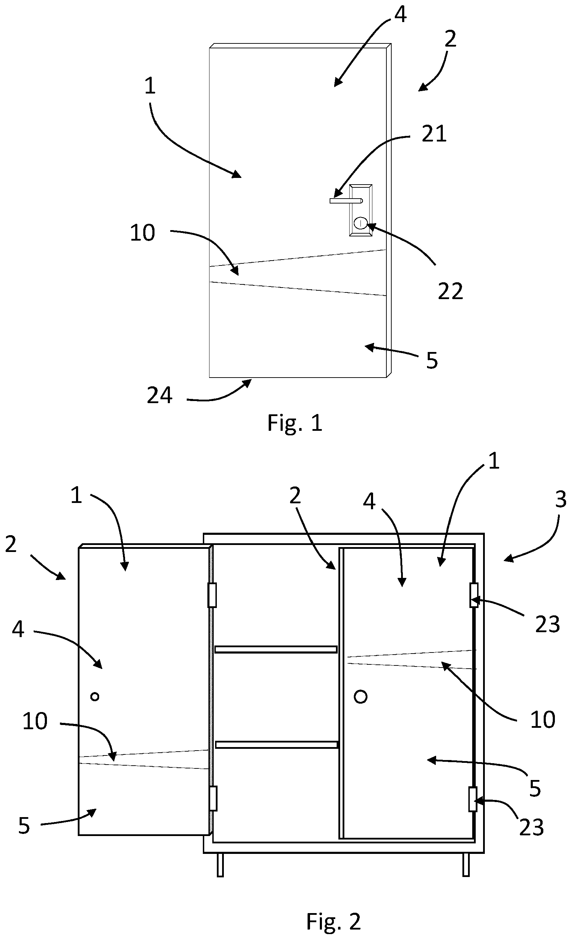

figure 1 is a schematic view of a door made with a panel according to the invention;
figure 2 is a schematic view of a piece of furniture made using some panels according to the invention;
figure 3 is a schematic front view of some components of a panel according to the invention in a step of the process for the production of such a panel;
figure 4 is a schematic front view of the components in figure 3, in a further step of the panel production process;
figure 5 is a schematic front view of some components of a panel according to the invention in a step of their assembly;
figure 6 is a schematic side view from the right of a detail of the components in figure 5;
figure 7 is a schematic front view of the components in figure 6, once the assembly therebetween is complete;
figure 8 is a schematic side view from the right of the components in figure 7;
figure 9 is a schematic front view of some components of a further embodiment of a panel according to the invention during their assembly;
figure 10 is a schematic side view from the right of the components in figure 9;
figure 11 is a schematic front view of some components of a further embodiment of a panel according to the invention during their assembly;
figure 12 is a schematic side view from the right of the components in figure 11;
figure 13 is a schematic front view of some components of a further embodiment of a panel according to the invention during their assembly;
figure 14 is a schematic front view of the components in figure 13, once assembled;
figure 15 is a schematic front view of some components of a further embodiment of a panel according to the invention during their assembly;
figure 16 is a schematic front view of the components in figure 15, once assembled;
figure 17 is a schematic front view of some components of a further embodiment of a panel according to the invention during their assembly;
figure 18 is a schematic front view of the components in figure 17, once assembled;
figure 19 is a schematic front view of a further embodiment of a panel according to the invention;
figure 20 is a schematic side view of a detail of some components of a further embodiment of a panel according to the invention during their assembly;
figure 21 is a schematic side view of the components in figure 20 once assembled;
figure 22 is a schematic side view of a detail of some components of a further advantageous embodiment of a panel according to the invention assembled together;
figure 23 is a schematic side view of a detail of some components of a further advantageous embodiment of a panel according to the invention assembled together;
figure 24 is a schematic side view of a detail of some components of a further advantageous embodiment of a panel according to the invention assembled together;
figure 25 is a schematic side view of a detail of an advantageous embodiment of a panel according to the invention;
figure 26 is a schematic side view of an advantageous embodiment of a panel according to the invention.

With reference to the attached figures, a panel is indicated overall by the number 1, for example for the production of doors 2, for example to close gates in buildings, not illustrated, or for the production of furnishing elements, for example wardrobes 3, dressers, not illustrated, etc.

The panel 1 comprises a first sheet 4, preferably but not necessarily flat, and a second sheet 5, preferably but not necessarily flat, which may or may not have the same thickness, and are made of a composite material comprising a mineral filler bound by a polymeric matrix, for example a material of the so-called "solid surface" type, preferably the material known with the brand Corian^{®}, or the material known with the brand HI-MACS^{®}, or the material known with the brand KRION^{®},or the material known with the brand STARON^{®}, etc.

The first sheet 4 and the second sheet 5 advantageously, but not necessarily, have a rectangular or square plan.

In the panel 1, the first sheet 4 and the second sheet 5 are attached to each other and to a supporting element 7 which keeps them respectively positioned with a first external face 40 and second external face 50 thereof facing away from such a supporting element 7 and lying on the same lying plane 6.

The first sheet 4 and the second sheet 5, attached to the supporting element 7, face each other with a first flat face 80 and a second flat face 90, respectively, which are spaced apart to define a gap 11 therebetween.

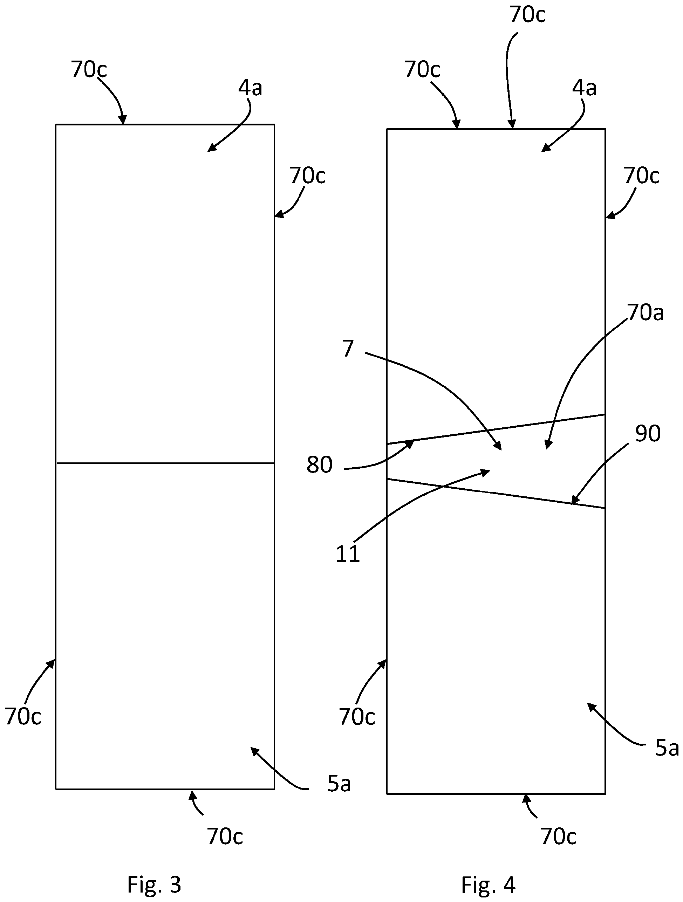

In an advantageous embodiment, for example that illustrated in figures 3 and 4, the first flat face 80 and/or the second flat face 90 are made by means of a milling, or similar material removal process, carried out, in the area corresponding to the gap 11, in a first sheet 4 and/or in a second sheet 5, preferably substantially rectangular or square in plan, after they have been attached to the supporting element 7, preferably so that they are leaning against, or very close to, each other, with the respective first and second external faces 40 and 50 lying on the same lying plane 6.

Such an embodiment is particularly advantageous, as it allows to obtain a gap 11 whose shape and dimensions are precisely defined, not being influenced by possible errors in the positioning of the first and second sheets on the supporting element 7, or by possible inaccuracies in the shape and dimensions of such components.

In a further advantageous embodiment, not illustrated, the first flat face 80 and the second flat face 90 may already be obtained, for example by milling, respectively on the first sheet 4 and on the second sheet 5, before they are attached to the supporting element 7; in such an advantageous embodiment, the first sheet 4 and the second sheet 5 are attached to each other and to the supporting element 7 so that the first flat face 80 and the second flat face 90 are spaced apart from each other to define the gap 11 there between.

Advantageously, the first sheet 4 and the second sheet 5 are attached to the supporting element 7 for example by gluing.

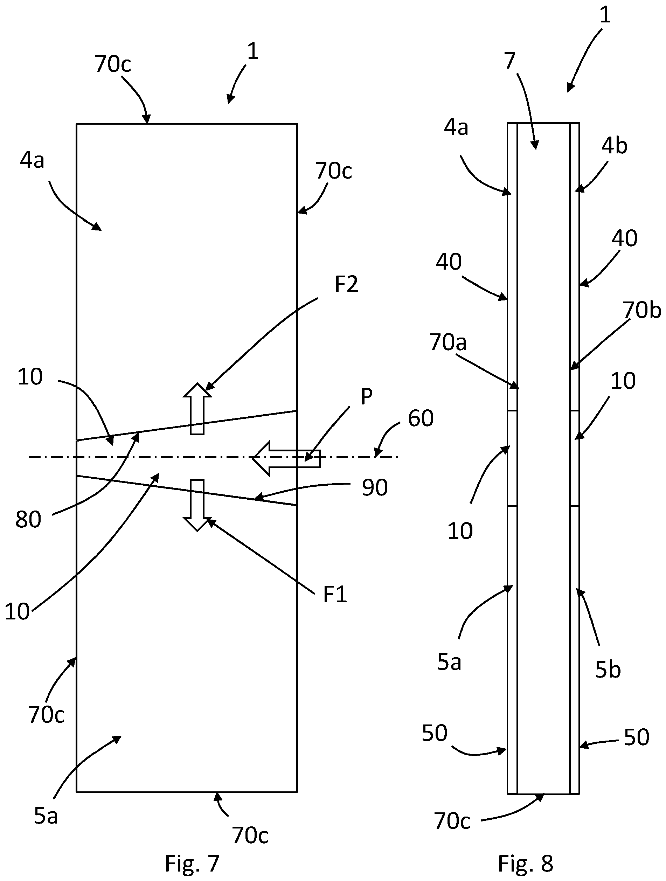

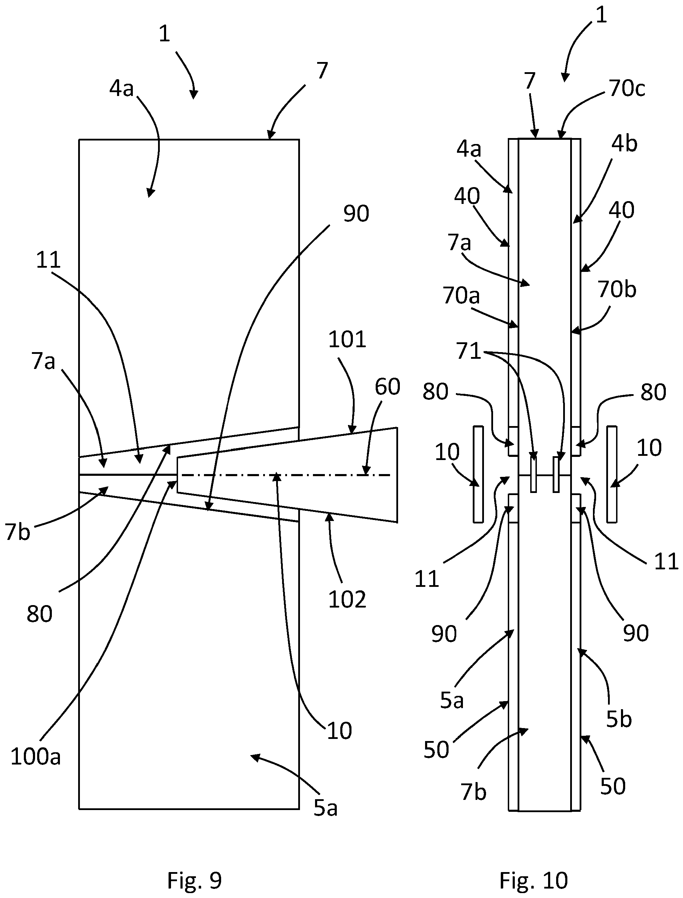

Advantageously, as for example in the advantageous embodiments illustrated in figures 3 to 8 and 11 to 26, the supporting element 7 may be made in one piece, for example in a single material; in other advantageous embodiments, such as that illustrated in figures 9 and 10, the supporting element 7 may be obtained by joining several portions 7a, 7b, made of the same or different materials, which are solidly attached together, for example by gluing, and/or by means of special pins 71, and/or by other attaching means, not illustrated.

For example, the supporting element 7 may be entirely made (or comprise one or more portions 7a, 7b made) of rigid polyurethane foam (such as the material known with the brand Purenit^{®}), or extruded polystyrene foam (known as XPS), etc.

In advantageous embodiments, for example those illustrated in figures 3 to 25, the supporting element 7 is shaped, on the whole, as a flat sheet and has, preferably, but not necessarily, a rectangular or square plan (other plans, for example circular or elliptical, are however contemplated in the invention).

In advantageous embodiments, for example those illustrated in figures 3 to 25, in which the supporting element 7 is integrally shaped as a flat sheet, the same has a first external surface 70a and a second external surface 70b, flat and parallel to each other, to each of which a first sheet 4 and a second sheet 5 can be advantageously attached.

In advantageous embodiments, such as those illustrated in the attached figures 3 to 10, a first sheet 4a and a second sheet 5a are attached to the first external surface 70a and a first sheet 4b and a second sheet 5b are attached to the second external surface 70b of the supporting element 7.

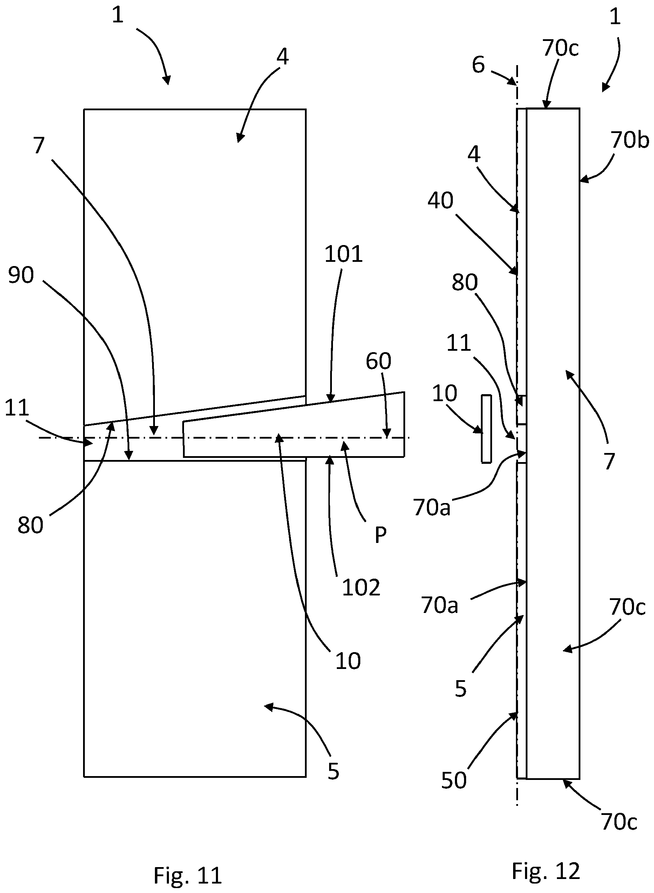

In other advantageous embodiments, such as the one illustrated in figures 11 and 12, a first sheet 4 and a second sheet 5 are attached only to the first external surface 70a; in this case, the second external surface 70b of the supporting element 7 may be exposed, or the same may be embedded in a decorative and/or structural element, not illustrated, or be covered with one or more further decorative and/or protective elements, not illustrated.

Advantageously, in a first advantageous embodiment, the supporting element 7 has a flat sheet shape, with the first external surface 70a and the second external surface 70b thereof substantially flat and parallel to each other; in this case, a first sheet and a second sheet, attached to one another between such a first external surface 70a and second external surface 70b, must have the same thickness so that the respective first and second external faces 40 and 50 lie on the same lying plane 6.

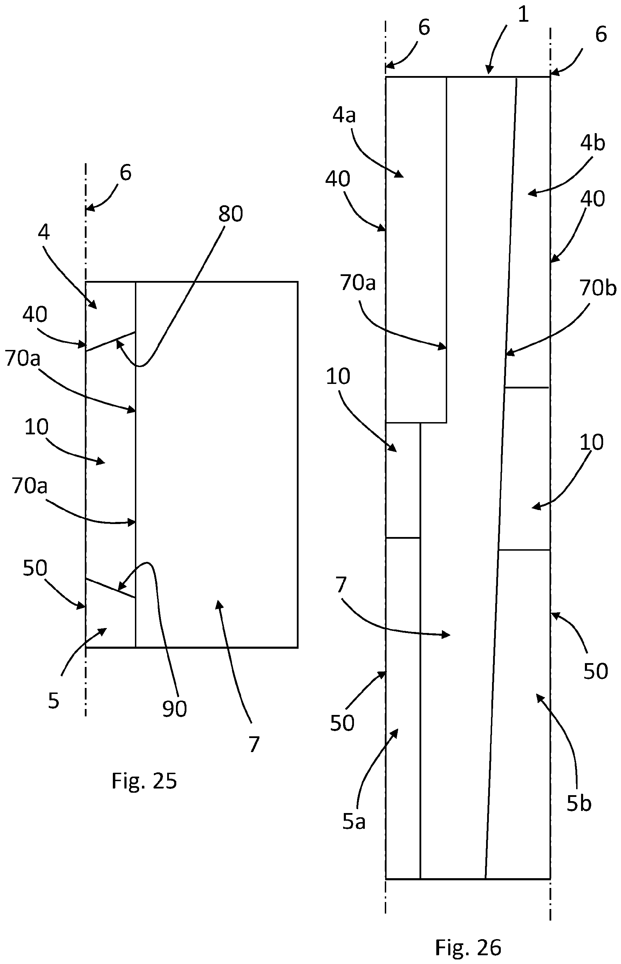

In further advantageous embodiments, for example that illustrated in figure 26, the first external surface 70a and/or the second external surface 70b of the supporting element 7 are not flat and/or are not parallel to the lying plane 6 of the first and second external faces 40 and 50, respectively, of the first and second sheets attached thereto; for example, in the advantageous embodiment illustrated in figure 26, the first external surface 70a is step-shaped, while the second external surface 70b is inclined (i.e., neither parallel nor perpendicular) with respect to the lying surface 6 of the external faces 40 and 50 of the first and second sheets 4b and 5b attached thereto. In this advantageous embodiment, the shape and/or thickness of the first and second sheets must be different so that, when attaching such first and second sheets to a same first or second external surface 70a or 70b, the first external face 40 and the second external face 50 of such first and second sheets lie on the same lying plane 6.

Advantageously, the lateral surface 70c of the supporting element 7 may in turn be covered with one or more further decorative and/or protective elements, not shown, made for example of the same material as the first and second sheets 4, 5, or of another material.

According to the invention, the panel 1 further comprises one or more wedges 10, advantageously shaped as a sheet, preferably flat, made of the same composite material comprising a mineral filler bound by a polymeric matrix of which the first sheet 4 and the second sheet 5 are composed.

Such one or more wedges 10 are interposed between the first flat face 80 and the second flat face 90 of the first and second sheets 4 and 5, respectively, to close the gap 11 therebetween, with the interposition of an adhesive, not shown.

Advantageously, the adhesive contains or consists of the same composite material comprising a mineral filler bound by a polymeric matrix of which the first sheet 4, the second sheet 5, and the one or more wedges 10 are made.

As will be further clarified below, the first flat face 80 and/or the second flat face 90 and/or the one or more wedges 10 are shaped so as to generate, as a result of a pressure P acting on such one or more wedges 10 towards the inside of the gap 11, in a direction of insertion 60 along which such one or more wedges 10 themselves are inserted into the gap 11, a force F1 and/or F2 acting between the one or more wedges 10 and the first and/or second flat face 80, 90, having at least one component parallel to the lying plane 6, which pushes such one or more wedges 10 towards the first flat face 80 and/or towards the second flat face 90.

Such a force F1, F2 causes the one or more wedges 10 to be kept pressed against the first and/or second flat face 80, 90, of the first and second sheets 4 and 5 respectively, thus ensuring a perfect adherence between such components (with the interposition of the adhesive), which ensures an optimal attaching thereof and a substantial invisibility of the joint lines therebetween.

In first advantageous embodiments, such as those illustrated in figures 3 to 12, 17 and 18, 25 and 26, the direction of insertion 60 is parallel to the lying plane 6, the first flat face 80 and/or the second flat face 90 are inclined with respect to the direction of insertion 60, and such first and second flat faces 80 and 90 are also inclined (i.e., not parallel, nor perpendicular) to each other.

In such first advantageous embodiments, the one or more wedges 10 may be advantageously inserted into the gap 11 by means of their translation along the direction of insertion 60, by exerting on such one or more wedges 10 a pressure P with at least one component along the direction of insertion 60 itself; the pressure P, as will be better explained below, due to the shape of the first flat face 80 and/or of the second flat face 90 and/or of the one or more wedges 10, generates a force acting between the one or more wedges 10 and the first and second flat faces 80, 90, having at least one component parallel to the lying plane 6 and such as to keep the one or more wedges 10 pressed against the first and/or the second flat face 80, 90.

In an advantageous embodiment, for example that illustrated in figures 3 to 8 and that illustrated in figures 9 and 10, the first flat face 80 and the second flat face 90 are inclined with respect to each other and with respect to the direction of insertion 60, so that the gap 11 therebetween has in plan (for example as in the views of figures 4, 5, 7, 9) an isosceles trapezoid shape, whose oblique sides correspond respectively to the first flat face 80 and to the second flat face 90.

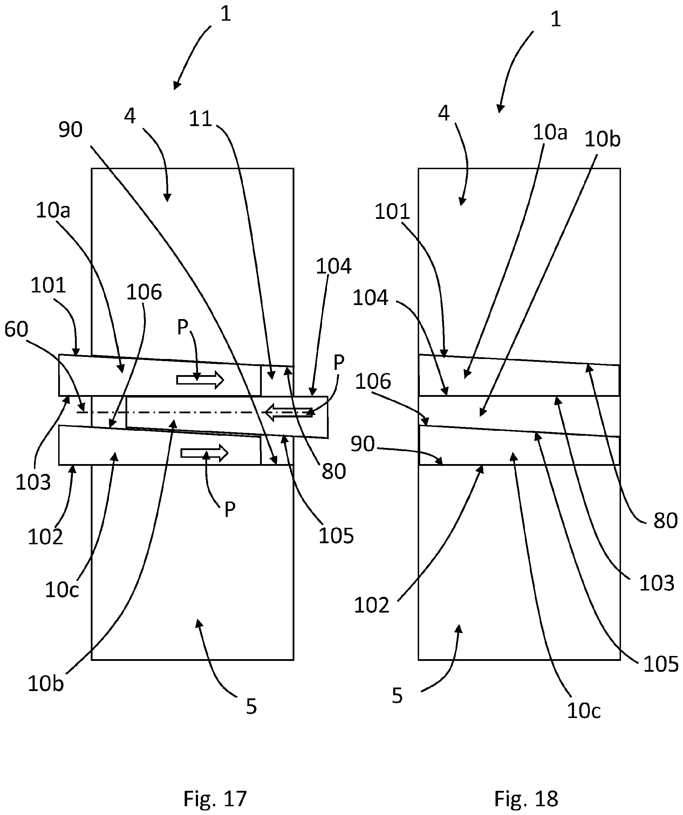

In further advantageous embodiments, for example that illustrated in figures 11 and 12, and 17 and 18, the first flat face 80 and the second flat face 90 are inclined to each other, and result, respectively, one inclined and the other parallel with respect to the direction of insertion 60, so that the gap 11 therebetween has in plan view (for example as in the views of figures 11 and 17) a rectangular trapezium shape, whose oblique side corresponds to the first flat face 80, and whose height corresponds to the second flat face 90.

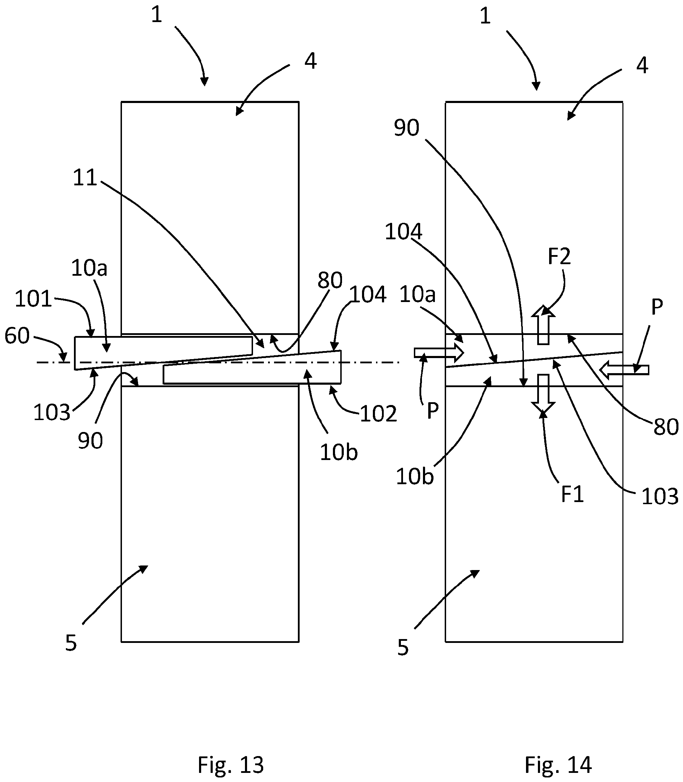

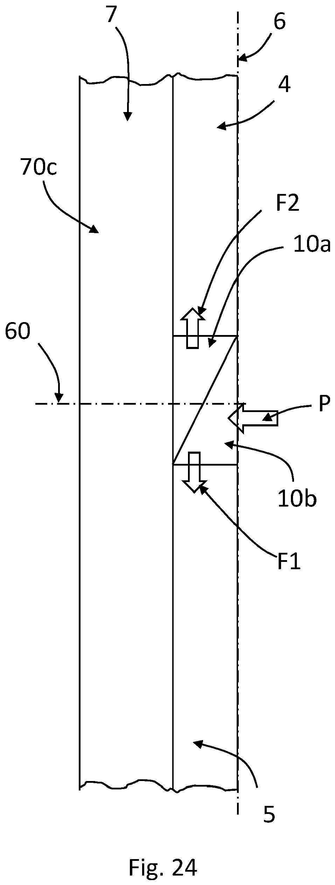

In further advantageous embodiments, for example that illustrated in figures 13 and 14, and that illustrated in figure 24, the first flat face 80 and the second flat face 90 are both parallel to the direction of insertion 60.

In this case, in a further advantageous embodiment, such a first flat face 80 and second flat face 90 are preferably, but not necessarily, perpendicular to the reference plane 6, so that the gap 11 therebetween has a rectangular shape both in plan and in a lateral section; it is underlined that in such an advantageous embodiment, the one or more wedges 10 may be inserted into the gap 11 either along a direction of insertion 60 parallel to the lying plane 6, or along a direction of insertion 60 perpendicular to such a lying plane 6.

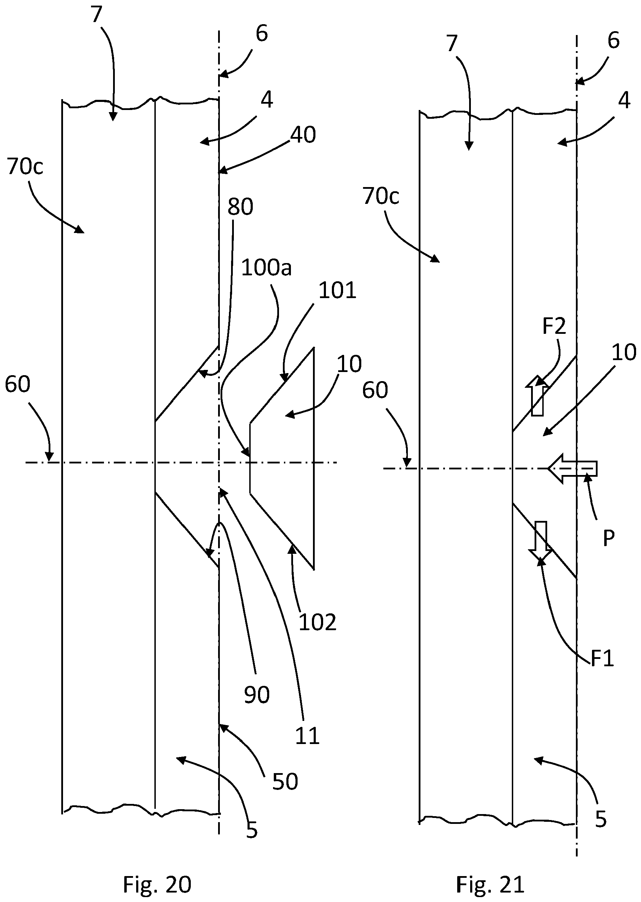

In other advantageous embodiments, such as those illustrated in figures 20 to 23, the direction of insertion 60 is perpendicular to the lying plane 6, and the first flat face 80 and/or the second flat face 90 are inclined (i.e., neither parallel nor perpendicular) to each other and to the lying plane 6 and the direction of insertion 60.

In advantageous embodiments, for example those illustrated in figures 20 to 22, the first flat face 80 and the second flat face 90 are both inclined (i.e., neither parallel nor perpendicular) with respect to the lying plane 6, so that the gap 11 therebetween has, in a lateral section, an isosceles trapezoid shape whose oblique sides correspond respectively to the first flat face 80 and to the second flat face 90, and the smaller base corresponds to the supporting element 7.

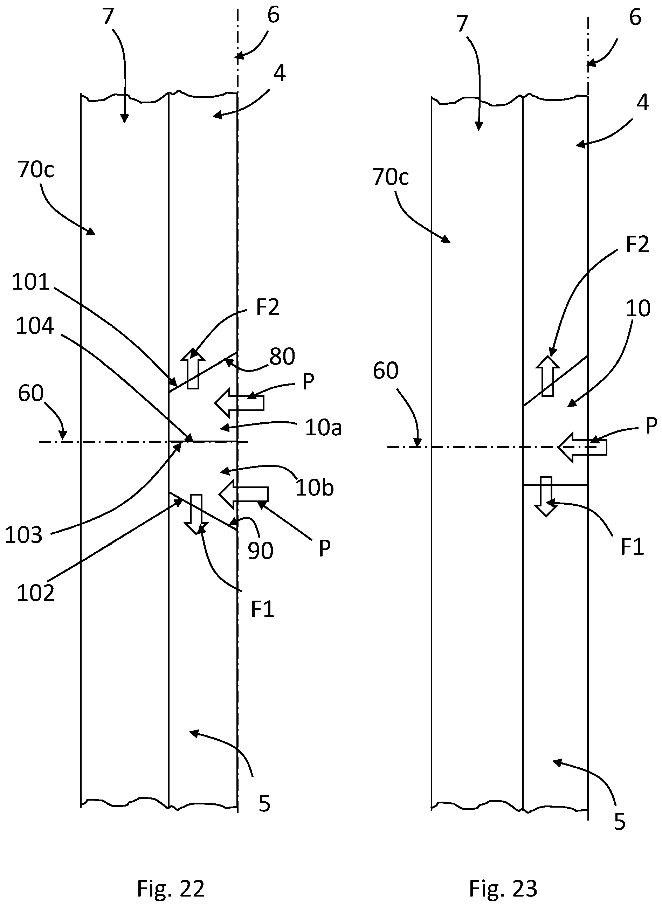

In other advantageous embodiments, for example that illustrated in figure 23, the first flat face 80 is inclined with respect to the lying plane 6, while the second flat face 90 is perpendicular to the lying plane 6 so that the gap 11 between the first and the second flat faces has, in a lateral section, a rectangular trapezium shape whose oblique side corresponds to the first flat face 80, whose height corresponds to the second flat face 90, and whose smaller base corresponds to the supporting element 7.

In advantageous embodiments, such as those illustrated in figures 20 to 23, the one or more wedges 10 may be advantageously inserted into the gap 11 by means of a translation thereof towards the supporting element 7 along a direction of insertion 60 which, in these advantageous embodiments, is perpendicular to the lying plane 6; such a translation is obtained by exerting a pressure P on such one or more wedges 10 with at least one component along the direction of insertion 60, which, as will be better explained below, due to the shape of the first flat face 80 and/or of the second flat face 90 and/or of the one or more wedges 10 generates a force acting between the one or more wedges 10 and the first and second flat faces 80, 90, having at least one component parallel to the lying plane 6 and such as to keep the one or more wedges 10 pressed against the first and/or the second flat face 80, 90.

Other inclines for the first flat face 80 and/or the second flat face 90 are however contemplated in the invention.

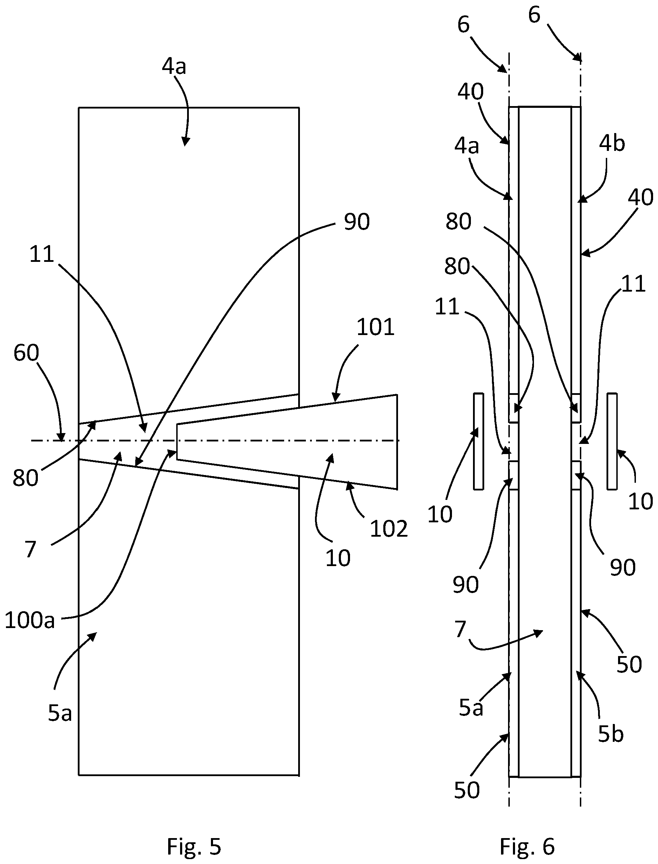

In advantageous embodiments, for example those illustrated in figures 6, 8, 10, 12, the first flat face 80 and/or the second flat face 90, whatever their incline with respect to the direction of insertion 60, are advantageously perpendicular to the lying plane 6.

In further advantageous embodiments, for example that illustrated in figure 25, the first flat face 80 and/or the second flat face 90, whatever their incline with respect to the direction of insertion 60 (which in figure 25 is perpendicular to the sheet), may be inclined (i.e., neither perpendicular nor parallel) with respect to the lying plane 6; preferably, for example as in the advantageous embodiment illustrated in figure 25, the first flat face 80 and/or the second flat face 90 are inclined so as to converge with each other towards the first and second external faces 40 and 50, so as to define an undercut that prevents the extraction of a wedge 10, inserted in the gap 11, in the distancing direction thereof from the supporting element 7.

In advantageous embodiments, for example those illustrated in figures 3 to 12, that illustrated in figures 17 and 18, and those illustrated in figures 20 to 23, the first flat face 80 is inclined with respect to the direction of insertion 60 of the one or more wedges 10, and interacts with a third flat face 101 of a wedge 10 having the same incline and the same shape as the first flat face 80; advantageously, the third flat face 101 is inclined so as to generate, by sliding on the first flat face 80 (having the same shape and incline) through the action of a pressure P of such a wedge 10 in the direction of insertion 60, towards the inside of the gap 11, a force F1 which pushes such a wedge 10 towards the second flat face 90.

Advantageously, the second flat face 90 interacts with a fourth flat face 102 of a wedge 10, which has the same incline and the same shape as the second flat face 90.

In advantageous embodiments, for example those illustrated in figures 3 to 10, and those illustrated in figures 20 to 22, the second flat face 90 is also inclined, with respect to the direction of insertion 60, with an incline opposite to the one of first flat face 80, such as to generate, following a sliding of the fourth flat face 102 on the second flat face 90 (having its same incline and shape), by action of a pressure P of the wedge 10 comprising the fourth flat face 102 towards the inside of the gap 11, in the direction of insertion 60, a force F2 pushing such a wedge 10 towards the first flat face 80.

In advantageous embodiments, such as those illustrated in figures 3 to 12, that illustrated in figures 20 and 21, and those illustrated in figures 25 and 26, the third flat face 101 and the fourth flat face 102 belong to the same wedge 10 that interacts with the first sheet 4 through the third flat face 101, and with the second sheet 5 through the fourth flat face 102; such a wedge 10 is shaped so as to completely close the gap 11, with the sole interposition of the aforesaid adhesive, not illustrated, respectively between the first flat face 80 and the third flat face 101, and between the second flat face 90 and the fourth flat face 102.

In advantageous embodiments, for example those illustrated in figures 3 to 10, and that illustrated in figures 20 and 21, in which the first flat face 80 and the second flat face 90 (and consequently the third flat face 101 and the fourth flat face 102 of the wedge 10) are mutually inclined so that the gap 11 between them has, respectively in plan and/or in a lateral section an isosceles trapezium shape whose oblique sides correspond respectively to the first flat face 80 and to the second flat face 90, and the third flat face 101 and the fourth flat face 102 belong to the same wedge 10, it results that such a same wedge 10 also has, respectively in a plan view and/or in a lateral section, an isosceles trapezium shape whose oblique sides correspond respectively to the third flat face 101 and to the fourth flat face 102; in this case, exerting a pressure P on such a wedge 10 towards the inside of the gap 11, having at least one component along the direction of insertion 60, results in the sliding of the second flat face 101 on the first flat face 80, and of the fourth flat face 102 on the second flat face 90.

Due to the inclines of such flat faces, two forces, F1 and F2, are therefore generated, which push the wedge 10 towards the second flat face 90 and the first flat face 80, respectively.

As illustrated for example in figure 5 and figure 9, or in figure 20, the insertion of the wedge 10 into the gap 11 occurs by inserting the minor base 100a of the wedge 10 into the gap 11 through the major base of the latter, and by exerting a pressure P on such a wedge 10 having at least one component in the direction of insertion 60, so as to advance the wedge 10 towards the minor base of the gap 11.

The sliding of the third flat face 101 on the first flat face 80, and of the fourth flat face 102 on the second flat face 90, generates, due to their incline, when the wedge 10 advances in the gap 11, two forces, F1 and F2, which push the wedge 10 both towards the flat face 80 and towards the second flat face 90, thus ensuring an optimal adherence (with the interposition of the adhesive) between such sheets and the wedge 10.

In other advantageous embodiments, for example those illustrated in figures 11, 12, and 23, the first flat face 80 and the second flat face 90 are mutually inclined so that the gap 11 therebetween has, respectively in a plan view and/or in a lateral section, a rectangular trapezoid shape whose oblique side corresponds to the first flat face 80 and whose height corresponds to the second flat face 90, and the third flat face 101 and the fourth flat face 102 belong to the same wedge 10, which also has, respectively in a plan view and/or in a lateral section, a trapezoidal rectangle shape whose oblique side corresponds to the third flat face 101 and whose height corresponds to the fourth flat face 102; in this case, by exerting a pressure P on such a wedge 10 towards the inside of the gap 11, having at least one component in the direction of insertion 60, the sliding of the third flat face 101 on the first flat face 80 is obtained. By the action of the incline of such flat faces, a force F1 is generated on the wedge 10 which pushes such a wedge 10 towards the second flat face 90, which in turn reacts by exerting a force F2 which pushes such a wedge 10 also towards the first flat face 80.

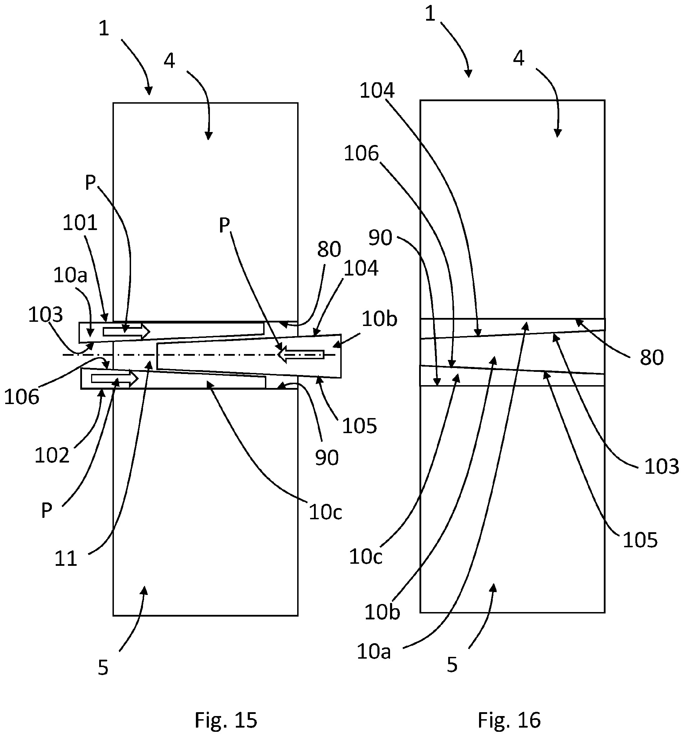

In further advantageous embodiments, for example that illustrated in figures 13 and 14, that illustrated in figures 15 and 16, that illustrated in figures 17 and 18, that illustrated in figure 22, that illustrated in figure 24, the one or more wedges 10 comprise a first wedge 10a and a second wedge 10b, positioned in the gap 11 and comprising, respectively, a fifth flat face 103 and a sixth flat face 104, both having the same shape and angle, which are facing and engaged with each other.

In advantageous embodiments, such as that illustrated in figures 13 and 14, that illustrated in figure 22, and that illustrated in figure 24, the one or more wedges comprise only a first wedge 10a and a second wedge 10b, coupled to each other through the fifth flat face 103 and the sixth flat face 104, respectively, with the interposition of the adhesive, not shown, which are shaped so as to completely close, as a whole, the gap 11, with only the interposition of the adhesive therebetween, and between them and the first flat face 80 and the second flat face 90; in these advantageous embodiments, the first wedge 10a preferably comprises, on the side opposite the fifth flat face 103, the third flat face 101 which couples, with the interposition of the adhesive, with the first flat face 80, and the second wedge 10b comprises, on the side opposite the sixth flat face 103, the fourth flat face 102 which couples, with the interposition of the adhesive, with the second flat face 90.

In advantageous embodiments, for example that illustrated in figures 13 and 14, that illustrated in figures 15 and 16, and that one illustrated in figure 24, the fifth flat face 103 and the sixth flat face 104 are inclined with respect to the direction of insertion 60 so as to generate, due to the incline of such fifth and sixth flat faces, following a sliding of the fifth flat face 103 on the sixth flat face 104 by action of a pressure P of the first wedge 10a towards the second wedge 10b, and/or of the second wedge 10b towards the first wedge 10a, in the direction of insertion 60, towards the inside of the gap 11, a force, F1 or F2, pushing such a first wedge 10a and such a second wedge 10b one towards the first flat face 80 and the other towards the second flat face 90.

In an advantageous embodiment, for example that illustrated in figures 13 and 14, the first and the second flat faces 80, 90 are parallel to the direction of insertion 60, and a first and a second wedge 10a and 10b comprise one the third flat face 101, coupled (with the interposition of the adhesive) with the first flat face 80, and the other the fourth flat face 102, coupled (with the interposition of the adhesive) with the second flat face 90; in this case, the first and second wedges 10a, 10b couple with each other (with the interposition of the adhesive) respectively through the fifth flat face 103 and the second flat face 104, which are advantageously inclined with respect to the direction of insertion 60, so as to generate, due to the incline of such flat faces following a sliding of the fifth flat face 103 on the sixth flat face 104 by action of a pressure P of the first wedge 10a towards the second wedge 10b, and/or of the second wedge 10b towards the first wedge 10a, along the direction of insertion 60, towards the inside of the gap 11, a force, F1 or F2, which pushes such a first wedge 10a and such a second wedge 10b, one towards the first flat face 80 and the other towards the second flat face 90, respectively.

In a further advantageous embodiment, not illustrated, in addition to the fifth flat face 103 and the sixth flat face 104, the first flat face 80 and/or the second flat face 90 (and consequently the third flat face 101 and the fourth flat face 102) may also be inclined with respect to the direction of insertion 60, so as to contribute to the generation of the force F1 and/or F2.

In a further advantageous embodiment, such as that illustrated in figure 22, a first and a second wedge 10a and 10b comprise one the third flat face 101, inclined with respect to the lying plane 6 and to the direction of insertion 60, coupled (with the interposition of the adhesive) with the first flat face 80, and the other, the fourth flat face 102, inclined with respect to the lying plane 6 and to the direction of insertion 60, with opposite incline with respect to the third flat face 101, and coupled (with the interposition of the adhesive) with the second flat face 90; in this case, the first and second wedges 10a, 10b are coupled together (with the interposition of the adhesive) respectively through the fifth flat face 103 and the sixth flat face 104, which are advantageously perpendicular to the lying plane 6 and parallel to the direction of insertion 60. In this case, the force pushing the wedges 10a, 10b towards the respective first or second flat face 80, 90, is generated, during the sliding respectively of the third flat face 101 on the first flat face 80 and of the fourth flat face 102 on the second flat face 90, by the action of a pressure P of such first and second wedges in the direction of insertion 60, towards the inside of the gap 11, due to the incline of the first, second, third and fourth flat faces.

Other combinations between the inclines of the first (and consequently third), second (and consequently fourth), fifth (and consequently sixth) flat faces are possible, as long as at least one of such flat faces is inclined with respect to the direction of insertion 60 so as to generate, following a reciprocal sliding of two coupled flat faces (with the interposition of the adhesive), in the direction of insertion 60, towards the inside of the gap 11, a force that pushes the wedges towards the first flat face 80 and/or the second flat face 90, respectively.

In advantageous embodiments, for example that illustrated in figures 15 and 16, and that illustrated in figures 17 and 18, the panel 1 comprises three or more wedges, for example three wedges 10a, 10b, 10c, coupled two by two to each other by means of respective flat faces, so as to fill the gap 11 as a whole with the interposition of the aforementioned adhesive; advantageously, the flat faces of two adjoining panels coupled together (with the interposition of the adhesive) may be inclined with respect to the direction of insertion 60, for example the flat faces indicated with the numbers 103, 104, 105 and 106 in figures 15 and 16, or they may be parallel to the direction of insertion 60, for example the flat faces 103 and 104 in figures 17 and 18.

Other combinations between the inclines of the flat faces of the three or more wedges are possible, as long as at least one of the first flat face 80 (and consequently the third flat face 101 of one of such three or more wedges engaging therewith), the second flat face 90 (and consequently the fourth flat face 102 of one of such three or more wedges engaging therewith), or the flat faces of two adjoining wedges coupled together are inclined with respect to the direction of insertion 60 so as to generate, following a reciprocal sliding of two coupled flat faces (with the interposition of the adhesive), in the direction of insertion 60, towards the inside of the gap 11, a force that pushes the wedges towards the first flat face 80 and/or the second flat face 90, respectively.

The method for the production of a panel 1 according to the invention will be described below.

After having prepared a supporting element 7 shaped overall as a sheet (for example a single sheet, or a plurality of portions attached to each other, for example two portions 7a, 7b, defining overall a sheet), it is possible to attach, for example by gluing, to a first external surface 70a and/or to a second external surface 70b, of such a supporting element 7, a first sheet 4 and a second sheet 5, made of a composite material comprising a mineral filler bound by a polymeric matrix, of the type described above (optionally after having been cut, preferably according to a rectangular or square plan profile), so that a first external face 40 of the first sheet 4 and a second external face 50 of the second sheet 5 lie on the same lying plane 6.

The method according to the invention comprises making, between the first sheet 4 and the second sheet 5, a gap 11 defined between a first flat face 80 of the first sheet 4 and a second flat face 90 of the second sheet 5, which are spaced apart and facing each other.

In an advantageous embodiment, for example that illustrated in figures 3 and 4, the gap 11 may be made after having attached a first sheet 4 and a second sheet 5, preferably substantially rectangular or square in plan, to the supporting element 7, so that the same are positioned respectively with their first external face 40 and second external face 50 facing away from the supporting element 7 and lying on the same lying plane 6, and preferably so that such first and second sheets 4 and 5 are leaning against, or very close to, each other (as illustrated for example in figure 4); once the first and second sheets have been attached to the supporting element, by means of a milling, or similar material removal process, performed in the first sheet 4 and/or in the second sheet 5, in the area corresponding to the gap 11, it is possible to obtain, respectively, the first flat face 80 and/or the second flat face 90, between which the gap 11 itself is defined.

In a further advantageous embodiment, not illustrated, the first flat face 80 and the second flat face 90 are already obtained, for example by milling, on the first sheet 4 and the second sheet 5 respectively, before they are attached to the supporting element 7; in such an advantageous embodiment, the first sheet 4 and the second sheet 5 are attached to each other and to the supporting element 7 so that the first flat face 80 and the second flat face 90 are spaced apart from each other, thus obtaining the gap 11 therebetween.

Once the first sheet 4 and the second sheet 5 are firmly attached to the supporting element 7, with the gap 11 present between the first flat face 80 and the second flat face 90 thereof, one or more wedges 10 can be positioned between the first and the second flat faces 80, 90 respectively of the first and the second sheets 4, 5, so as to close the gap 11 defined between such first and second flat faces 80 and 90, with the interposition of a appropriate adhesive, by exerting on such one or more wedges 10, for a given time interval, a pressure P in the direction of insertion 60, towards the inside of the gap 11, so as to generate between such one or more wedges 10 and such first and second flat faces 80, 90 a force F1, F2 with at least one component parallel to the lying plane 6, which keeps such one or more wedges 10 pressed against such first and/or second flat face 80, 90.

For example, with reference to the advantageous embodiments illustrated in figures 3 to 18, in which the first flat face 80, and the second flat face 90 (and consequently the third flat face 101 and the fourth flat face 102 of the wedge 10), are perpendicular to the lying plane 6, the insertion of the one or more wedges 10 into the gap 11 may advantageously occur along a direction of insertion 60 lying in a plane parallel to the lying plane 6.

In other advantageous embodiments, for example those illustrated in figures 20 to 23, in which the first flat face 80 and possibly the second flat face 90 are inclined (and therefore not parallel or perpendicular) with respect to the lying plane 6, and also in a further advantageous embodiment, for example that illustrated in figure 24, in which the first and the second flat faces 80 and 90 are perpendicular (or possibly slightly inclined with respect to) the lying plane 6 and parallel to each other, the insertion of the one or more wedges 10 into the gap 11 can advantageously occur along a direction of insertion 60 perpendicular to the lying plane 6.

In the case of a single wedge 10, exerting a pressure P thereon along the direction of insertion 60, towards the inside of the gap 11, there is the sliding of the second flat face 101 of such a wedge 10 on the first flat face 80 of the first sheet 4, and the sliding of the third flat face 102 of the wedge 10 on the second flat face 90 of the second sheet 5; the incline of the flat faces sliding on each other, at least two of which, engaged with each other, are inclined with respect to the direction of insertion 60, generates, as the sliding inwards of the gap 11 proceeds, two forces F1, F2 which push the wedge 10 towards the first flat face 80 and towards the second flat face 90. The adhesive present between the wedge 10 and the first and second flat faces, due to such forces, is compressed and partially ejected by the gap 11, so that between the wedge 10 and the first and second flat faces 80 and 90 only the minimum amount of adhesive necessary to achieve an effective bonding remains.

Therefore, the adhesive layer is very small, and basically invisible from the outside of the panel 1, although its bonding effect is nonetheless effective, in particular due to the high pressure between the flat faces connected by it.

If there are two or more wedges 10, the process of attaching them inside the gap 11 is substantially the same, with the difference that, if the direction of insertion 60 is parallel to the lying plane 6, two contiguous wedges 10, if they are coupled to each other by means of two flat faces inclined with respect to the direction of insertion 60, are inserted into the gap 11 starting from opposite parts of the latter, and are pressed respectively with pressures P having opposite directions to each other (for example in the advantageous embodiments illustrated respectively in figures 13 and 14, 15 and 16, 17 and 18).

Regardless of the design of the first and second flat faces 80, 90 and of the one or more wedges 10, the pressure P on the wedges is maintained for a predetermined period of time, in particular until the adhesive has completely set, and can then be interrupted.

Advantageously, the process for the production of the panel 1 may include the removal of any portions of adhesive that have solidified outside the gap 11.

In advantageous embodiments, for example that illustrated in figures 3 to 10, a first sheet 4a and a second sheet 5a, and consequently the one or more wedges 10 placed to close the gap 11 therebetween, are attached to the first external surface 70a, and a first sheet 4b and a second sheet 5b, and consequently the one or more wedges 10 placed to close the gap 11 therebetween, are attached to the second external surface 70b of the supporting element 7.

In other advantageous embodiments, such as the one illustrated in figures 11 and 12, a first sheet 4 and a second sheet 5 are attached only to the first external surface 70a; in this case, the second external surface 70b of the supporting element 7 may be exposed, or the same may be embedded in a decorative and/or structural element, not illustrated, or be covered with one or more further decorative and/or protective elements, not illustrated.

Advantageously, the lateral surface 70c of the supporting element 7 may in turn be covered with one or more further decorative and/or protective elements, not shown, made for example of the same material as the first and second sheets 4, 5, or of another material.

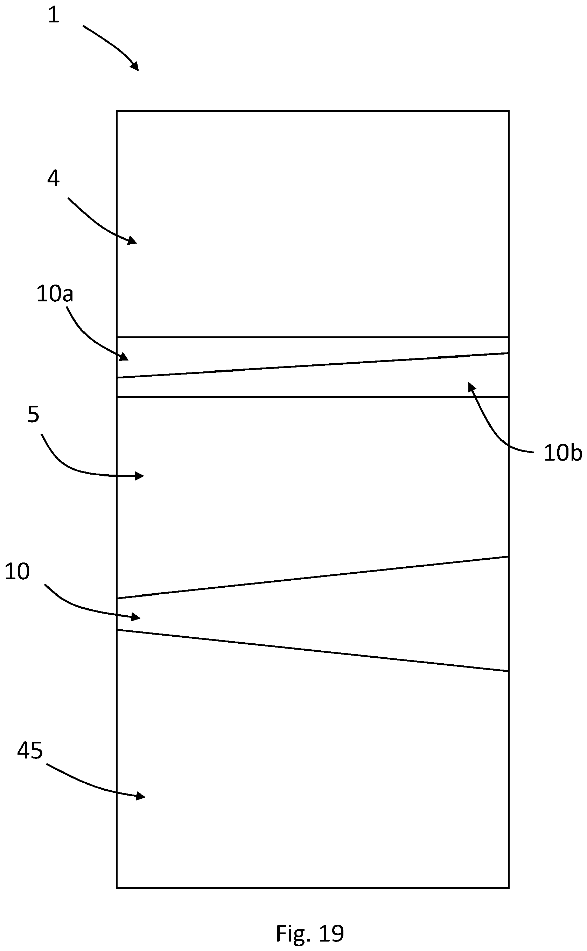

In advantageous embodiments, for example that illustrated in figure 19, one or more further sheets 45 may be attached to the first external surface 70a and/or to the second external surface 70b of the supporting element 7, the external faces of which, not illustrated, lie on the same lying plane 6, and are made of the same composite material comprising a mineral filler bound by a polymeric matrix of the first and second sheets 4 and 5; in this case, gaps are included between such one or more further sheets 45 and/or between the same and the first sheet 4 or the second sheet 5 which are each enclosed by one or more wedges, analogous to the one or more wedges 10, 10a, 10b, 10c, with the interposition of an adhesive, not illustrated, analogous to the one or more wedges 10, 10a, 10b, 10c interposed between the first sheet 4 and the second sheet 5 described above.

The panel 1 according to the invention can be used, for example, for the production of doors 2 to close openings, or for the closure of wardrobes 3, or for the production of furniture uprights and/or crossbeams, etc.

If it is used to produce a door 2, empties can be obtained for example on the panel 1, into which functional elements can be inserted, for example a handle 21 and/or a lock 22, hinges 23, etc.

In the case of a door 2, the bottom 24 thereof, facing the ground, is typically not visible, and therefore it is possible to leave exposed, at such a bottom 24, the supporting element 7, which in this case is preferably made, at least at the bottom 24, of a material resistant to humidity, and mechanically resistant, even if not aesthetically valuable, for example the material known with the brand Purenit^{®}, or XPS, etc.

The panel according to the invention, by virtue of the particular shape of the first and/or second flat face, and/or of the one or more wedges, can be covered, on its front surface and/or on its rear surface, with two or more sheets made of a composite material comprising a mineral filler bound by a polymeric matrix (for example the material known with the brand Corian^{®}, or the material known with the brand HI-MACS^{®}, or the material known with the brand KRION^{®},or the material known with the brand STARON^{®}) so that the connection regions between the various sheets are practically invisible, which, in addition to improving the overall appearance of the panel, improves the attachment of the various sheets, reducing the risk of the sheets becoming detached, and/or of dirt or pathogens being deposited in their connection regions.

Furthermore, the panel according to the invention, due to its particular structure, lends itself to being easily manufactured in an automatic or semi-automatic manner, which limits the production costs thereof and makes it adapted to be produced industrially, on a large scale.

## Claims

1. Panel (1) comprising:
- a first sheet (4) and a second sheet (5), made of a composite material comprising a mineral filler bound by a polymeric matrix, said first sheet (4) and second sheet (5) being attached to each other and to a supporting element (7) which keeps them positioned respectively with a first external face (40) and a second external face (50) of them facing away from said supporting element (7) and lying on a same lying plane (6), said first sheet (4) and second sheet (5) facing each other respectively with a first flat face (80) and a second flat face (90) spaced apart one another so as to define a gap (11) therebetween;
- one or more wedges (10, 10a, 10b, 10c) made of said composite material comprising a mineral filler bound by a polymeric matrix, interposed between said first flat face (80) and said second flat face (90) to close said gap (11) with the interposition of an adhesive,
**characterized in that**
said first flat face (80) and/or said second flat face (90) and/or said one or more wedges (10, 10a, 10b, 10c) are shaped in such a way to generate, as a result of a pressure (P) exerted on said one or more wedges (10, 10a, 10b, 10c) towards the inside of said gap (11), in an direction of insertion (60) along which they are inserted in said gap (11), a force (F1, F2) that acts among said one or more wedges (10, 10a, 10b, 10c) and said first and/or second flat face (80, 90), having at least a component parallel to said laying plane (6), which pushes said one or more wedges (10, 10a, 10b, 10c) towards said first flat face (80) and/or towards said second flat face (90).

2. Panel (1), as in claim 1, wherein said first flat face (80) is inclined with respect to said direction of insertion (60), and interacts with a third flat face (101) of a wedge (10, 10a) of said one or more wedges (10, 10a, 10b, 10c), having the same incline and the same shape of said first flat face (80), the incline of said first flat face (80) and of said third flat face (101) being such as to generate, as a consequence of a sliding of said third flat face (101) on said first flat face (80) due to a pressure (P) of said wedge (10) comprising said third flat face (101) towards the inside of said gap (11), in said direction of insertion (60), a force (F1) which pushes said wedge (10) comprising said third flat face (101) towards said second flat face (90) .

3. Panel (1), as in claim 2, wherein said second flat face (90) is inclined, with respect to said direction of insertion (60), with an incline opposite to said first face (80), and interacts with a fourth flat face (102), which belongs to a wedge (10) of said one or more wedges (10, 10a, 10b, 10c), having the same incline and the same shape of said second flat face (90) and shaped in such a way to generate, because of a sliding of said fourth flat face (102) on said second flat face (90) due to a pressure (P) of said wedge (10) comprising said fourth flat face (102) towards the inside of said gap (11), in said direction of insertion (60), a force (F2) which pushes said wedge (10) comprising said fourth flat face (102) towards said first flat face (80).

4. Panel (1), as in claim 3, wherein said third flat face (101) and said fourth flat face (102) belong to a single wedge (10) of said one or more wedges (10, 10a, 10b, 10c), which interacts, respectively, with said first flat face (80) through said third flat face (101), and with said second flat face (90) through said fourth flat face (102).

5. Panel (1), as in one or more of previous claims, wherein said one or more wedges (10, 10a, 10b, 10c) comprise a first wedge (10a) and a second wedge (10b), placed in said gap (11) and comprising respectively a fifth flat face (103) and a sixth flat face (104) both having the same shape and the same incline with respect to said direction of insertion (60), and facing and engaged with each other with the interposition of an adhesive.

6. Panel (1), as in claim 5, wherein said fifth flat face (103) and said sixth flat face (104) are inclined, with respect to said direction of insertion (60), so as to generate, because of the incline of said fifth and sixth flat faces (103, 104), as consequence of a sliding of said fifth flat face (103) on said sixth flat face (104) due to a pressure (P) of said first wedge (10a) towards said second wedge (10b) and/or of said second wedge (10b) towards said first wedge (10a), towards the inside of said gap (11), along said direction of insertion (60), a force (F1, F2) which pushes said first and second wedge (10a, 10b) one towards said first flat face (80) and the other towards said second flat face (90).

7. Panel (1), as in one or more of previous claims, comprising three or more of said wedges (10, 10a, 10b, 10c) coupled two by two by means of respective flat faces (103, 104, 105, 106), with the interposition of said adhesive.

8. Panel (1), as in one or more of previous claims, wherein said supporting element (7) is made in a single piece or is obtained by joining a plurality of portions (7a, 7b) made of different materials or of the same material, integrally attached with each other.

9. Method for the production of a panel (1) comprising the following steps:
- attaching a first sheet (4) and a second sheet (5), made of a composite material comprising a mineral filler bound by a polymeric matrix, to a supporting element (7) which keeps said first and second sheet (4, 5) positioned respectively with their first external face (40) and second external face (50) facing away from said supporting element (7) and laying on a same laying plane (6);
- setting up, between said first sheet (4) and said second sheet (5), a gap (11) defined between a first flat face (80) of said first sheet (4) and a second flat face (90) of said second sheet (5), spaced apart and facing each other;
- arranging one or more wedges (10, 10a, 10b, 10c), made of said composite material comprising a mineral filler bound by a polymeric matrix, shaped in such a way to be able to be interposed between said first and second flat face (80, 90), to close as a whole said gap (11) with the interposition of an adhesive, said first flat face (80) and/or said second flat face (90) and/or said one or more wedges (10, 10a, 10b, 10c) being shaped in such a way to generate, as a result of a pressure (P) on said one or more wedges (10, 10a, 10b, 10c) towards the inside of said gap (11), in a direction of insertion (60) along which the same are inserted in said gap (11), a force (F1, F2) which acts among said one or more wedges (10, 10a, 10b, 10c) and said first and/or second flat face (80, 90), having at least a component parallel to said laying plane (6), which pushes said one or more wedges (10, 10a, 10b, 10c) towards said first flat face (80) and/or towards said second flat face (90);
- positioning said one or more wedges (10, 10a, 10b, 10c) between said first and second flat face (80, 90) so as to close said gap (11), with the interposition of an adhesive, exerting on said one or more wedges (10, 10a, 10b, 10c), for a predetermined time interval, a pressure (P) towards the inside of said gap (11), having at least a component in said direction of insertion (60), so as to generate among said one or more wedges (10, 10a, 10b, 10c) and said first and second flat face (80, 90) a force (F1, F2) having at least a component parallel to said laying plane (6), which pushes said one or more wedges (10, 10a, 10b, 10c) towards said first flat face (80) and/or towards said second flat face (90) .

10. Method, as in claim 9, **characterised in that** said step of setting up, between said first sheet (4) and said second sheet (5), a gap (11) defined between a first flat face (80) of said first sheet (4) and a second flat face (90) of said second sheet (5), spaced apart and facing each other, comprises obtaining said first flat face (80) and/or said second flat face (90) by means of a removal of material from said first sheet (4) and/or from said second sheet (5), after said first sheet (4) and said second sheet (5) have been attached to said supporting element (7).

11. Method, as in claim 9 or 10, comprising the step of covering a lateral surface (70c) of said supporting element (7) with one or more further decorative and/or protective elements.

## Patentansprüche

1. Platte (1), umfassend:
- eine erste Tafel (4) und eine zweite Tafel (5), die aus einem Verbundmaterial gefertigt sind, das einen mineralischen Füllstoff umfasst, der durch eine Polymermatrix gebunden ist, wobei die erste Tafel (4) und die zweite Tafel (5) aneinander und an einem Stützelement (7) angebracht sind, das sie jeweils mit einer ersten Außenfläche (40) und einer zweiten Außenfläche (50) positioniert hält, die von dem Stützelement (7) abgewandt sind und auf einer gleichen Liegeebene (6) liegen, wobei die erste Tafel (4) und die zweite Tafel (5) jeweils mit einer ersten ebenen Fläche (80) und einer zweiten ebenen Fläche (90) einander zugewandt sind, die voneinander beabstandet sind, um einen Spalt (11) dazwischen zu definieren;
- ein oder mehrere Keile (10, 10a, 10b, 10c) aus dem Verbundmaterial, das einen mineralischen Füllstoff umfasst, der durch eine Polymermatrix gebunden ist, die zwischen der ersten ebenen Fläche (80) und der zweiten ebenen Fläche (90) angeordnet ist, um den Spalt (11) unter Zwischenlage eines Klebstoffs zu schließen,
**dadurch gekennzeichnet, dass**
die erste ebene Fläche (80) und/oder die zweite ebene Fläche (90) und/oder der eine oder die mehreren Keile (10, 10a, 10b, 10c) so geformt sind, dass sie infolge eines Drucks (P), der auf den einen oder die mehreren Keile (10, 10a, 10b, 10c) in Richtung der Innenseite des Spalts (11) ausgeübt wird, in einer Einführrichtung (60), entlang der sie in den Spalt (11) eingeführt werden, eine Kraft (F1, F2) erzeugen, die zwischen dem einen oder den mehreren Keilen (10, 10a, 10b, 10c) und der ersten und/oder zweiten ebenen Fläche (80, 90) wirkt und mindestens eine Komponente parallel zu der Liegeebene (6) aufweist, die den einen oder die mehreren Keile (10, 10a, 10b, 10c) in Richtung der ersten ebenen Fläche (80) und/oder in Richtung der zweiten ebenen Fläche (90) drückt.

2. Platte (1) nach Anspruch 1, wobei die erste flache Fläche (80) in Bezug auf die Einführrichtung (60) geneigt ist und mit einer dritten ebenen Fläche (101) eines Keils (10, 10a) des einen oder der mehreren Keile (10, 10a, 10b, 10c) zusammenwirkt, die die gleiche Neigung und die gleiche Form wie die erste flache Fläche (80) aufweist, wobei die Neigung der ersten ebenen Fläche (80) und der dritten ebenen Fläche (101) derart ist, dass sie als Folge eines Gleitens der dritten ebenen Fläche (101) auf der ersten ebenen Fläche (80) aufgrund eines Drucks (P) des Keils (10), der die dritte flache Fläche (101) umfasst, in Richtung der Innenseite des Spalts (11) in der Einführrichtung (60) eine Kraft (F1) erzeugt, die den Keil (10), der die dritte flache Fläche (101) umfasst, in Richtung der zweiten ebenen Fläche (90) drückt.

3. Platte (1) nach Anspruch 2, wobei die zweite flache Fläche (90) in Bezug auf die Einführrichtung (60) mit einer Neigung entgegengesetzt der ersten Fläche (80) geneigt ist und mit einer vierten ebenen Fläche (102) zusammenwirkt, die zu einem Keil (10) des einen oder der mehreren Keile (10, 10a, 10b, 10c) gehört, die die gleiche Neigung und die gleiche Form wie die zweite flache Fläche (90) aufweist und so geformt ist, dass sie wegen eines Gleitens der vierten ebenen Fläche (102) auf der zweiten ebenen Fläche (90) aufgrund eines Drucks (P) des Keils (10), der die vierte flache Fläche (102) umfasst, in Richtung der Innenseite des Spalts (11) in der Einführrichtung (60) eine Kraft (F2) erzeugt, die den Keil (10), der die vierte flache Fläche (102) umfasst, in Richtung der ersten ebenen Fläche (80) drückt.

4. Tafel (1) nach Anspruch 3, wobei die dritte flache Fläche (101) und die vierte flache Fläche (102) zu einem einzelnen Keil (10) des einen oder der mehreren Keile (10, 10a, 10b, 10c) gehören, der jeweils mit der ersten ebenen Fläche (80) durch die dritte flache Fläche (101) und mit der zweiten ebenen Fläche (90) durch die vierte flache Fläche (102) zusammenwirkt.

5. Platte (1) nach einem oder mehreren der vorhergehenden Ansprüche, wobei der eine oder die mehreren Keile (10, 10a, 10b, 10c) einen ersten Keil (10a) und einen zweiten Keil (10b) umfassen, die in dem Spalt (11) platziert sind und jeweils eine fünfte flache Fläche (103) und eine sechste flache Fläche (104) umfassen, die beide die gleiche Form und die gleiche Neigung in Bezug auf die Einführrichtung (60) aufweisen und einander unter Zwischenlage eines Klebstoffs zugewandt sind und miteinander in Eingriff stehen.

6. Platte (1) nach Anspruch 5, wobei die fünfte flache Fläche (103) und die sechste flache Fläche (104) in Bezug auf die Einführrichtung (60) geneigt sind, um wegen der Neigung der fünften und sechsten ebenen Fläche (103, 104) als Folge eines Gleitens der fünften ebenen Fläche (103) auf der sechsten ebenen Fläche (104) aufgrund eines Drucks (P) des ersten Keils (10a) in Richtung des zweiten Keils (10b) und/oder des zweiten Keils (10b) in Richtung des ersten Keils (10a), in Richtung der Innenseite des Spalts (11), entlang der Einführrichtung (60) eine Kraft (F1, F2) zu erzeugen, die den ersten und zweiten Keil (10a, 10b) einen in Richtung der ersten ebenen Fläche (80) und den anderen in Richtung der zweiten ebenen Fläche (90) drückt.

7. Platte (1) nach einem oder mehreren der vorhergehenden Ansprüche, umfassend drei oder mehrere der Keile (10, 10a, 10b, 10c), die mittels jeweiliger flacher Flächen (103, 104, 105, 106) unter Zwischenlage des Klebstoffs zu zweit gekoppelt sind.

8. Platte (1) nach einem oder mehreren der vorhergehenden Ansprüche, wobei das Stützelement (7) einstückig gefertigt ist oder durch Verbinden einer Vielzahl von Abschnitten (7a, 7b), die aus verschiedenen Materialien oder aus demselben Material gefertigt sind, erhalten wird, die einstückig miteinander verbunden sind.

9. Verfahren zur Herstellung einer Platte (1) umfassend die folgenden Schritte:
- Befestigen einer ersten Tafel (4) und einer zweiten Tafel (5), die aus einem Verbundmaterial gefertigt sind, das einen mineralischen Füllstoff umfasst, der durch eine Polymermatrix gebunden ist, an einem Stützelement (7), das die erste und zweite Tafel (4, 5) jeweils mit ihrer ersten Außenfläche (40) und zweiten Außenfläche (50) positioniert hält, die von dem Stützelement (7) abgewandt sind und auf derselben Liegeebene (6) liegen;
- Einrichten eines Spalts (11) zwischen der ersten Tafel (4) und der zweiten Tafel (5), der zwischen einer ersten ebenen Fläche (80) der ersten Tafel (4) und einer zweiten ebenen Fläche (90) der zweiten Tafel (5) definiert ist, die voneinander beabstandet und einander zugewandt sind;
- Anordnen eines oder mehrerer Keile (10, 10a, 10b, 10c), die aus dem Verbundmaterial gefertigt sind, das einen mineralischen Füllstoff umfasst, der durch eine Polymermatrix gebunden ist, die so geformt sind, dass sie zwischen der ersten und zweiten ebenen Fläche (80, 90) angeordnet werden können, um den Spalt (11) unter Zwischenlage eines Klebstoffs als Ganzes zu schließen, wobei die erste ebene Fläche (80) und/oder die zweite ebene Fläche (90) und/oder der eine oder die mehreren Keile (10, 10a, 10b, 10c) so geformt sind, dass sie, infolge eines Drucks (P) auf den einen oder die mehreren Keile (10, 10a, 10b, 10c) in Richtung der Innenseite des Spalts (11) in einer Einführrichtung (60), entlang der sie in den Spalt (11) eingeführt werden, eine Kraft (F1, F2) erzeugen, die zwischen dem einen oder den mehreren Keilen (10, 10a, 10b, 10c) und der ersten und/oder zweiten ebenen Fläche (80, 90) wirkt und mindestens eine Komponente parallel zur Liegeebene (6) aufweist, die den einen oder die mehreren Keile (10, 10a, 10b, 10c) in Richtung der ersten ebenen Fläche (80) und/oder in Richtung der zweiten ebenen Fläche (90) drückt;
- Positionieren des einen oder der mehreren Keile (10, 10a, 10b, 10c) zwischen der ersten und zweiten ebenen Fläche (80, 90), um den Spalt (11) zu schließen, unter Zwischenlage eines Klebstoffs, der auf den einen oder die mehreren Keile (10, 10a, 10b, 10c) für ein vorbestimmtes Zeitintervall einen Druck (P) in Richtung der Innenseite des Spalts (11) ausübt, und mindestens eine Komponente in der Einführrichtung (60) aufweist, um unter dem einen oder den mehreren Keilen (10, 10a, 10b, 10c) und der ersten und zweiten ebenen Fläche (80, 90) eine Kraft (F1, F2), die mindestens einer Komponente parallel zur Liegeebene (6) aufweist, zu erzeugen, die den einen oder die mehreren Keile (10, 10a, 10b, 10c) in Richtung der ersten ebenen Fläche (80) und/oder in Richtung der zweiten ebenen Fläche (90) drückt.

10. Verfahren nach Anspruch 9, **dadurch gekennzeichnet, dass** der Schritt des Einrichtens eines Spalts (11) zwischen der ersten Tafel (4) und der zweiten Tafel (5), der zwischen einer ersten ebenen Fläche (80) der ersten Tafel (4) und einer zweiten ebenen Fläche (90) der zweiten Tafel (5) definiert ist, die voneinander beabstandet und einander zugewandt sind, das Erhalten der ersten ebenen Fläche (80) und/oder der zweiten ebenen Fläche (90) mittels eines Entfernens von Material von der ersten Tafel (4) und/oder von der zweiten Tafel (5) umfasst, nachdem die erste Tafel (4) und die zweite Tafel (5) an dem Stützelement (7) angebracht wurden.

11. Verfahren nach Anspruch 9 oder 10, umfassend den Schritt des Bedeckens einer Seitenfläche (70c) des Stützelements (7) mit einem oder mehreren weiteren dekorativen und/oder schützenden Elementen.

## Revendications

1. Panneau (1) comprenant:
- une première feuille (4) et une seconde feuille (5), constituées d'un matériau composite comprenant une charge minérale liée par une matrice polymère, ladite première feuille (4) et ladite seconde feuille (5) étant fixées l'une à l'autre et à un élément de support (7) qui les maintient positionnées respectivement avec une première face externe (40) et une deuxième face externe (50) d'entre elles tournées à l'opposé dudit élément de support (7) et reposant sur un même plan horizontal (6), ladite première feuille (4) et seconde feuille (5) se faisant face respectivement avec une première face plane (80) et une deuxième face plane (90) espacées l'une de l'autre de manière à définir un espace (11) entre elles;
- une ou plusieurs cales (10, 10a, 10b, 10c) constituées dudit matériau composite comprenant une charge minérale liée par une matrice polymère, interposées entre ladite première face plane (80) et ladite deuxième face plane (90) pour fermer ledit espace (11) avec interposition d'un adhésif,
**caractérisé en ce que**
ladite première face plane (80) et/ou ladite deuxième face plane (90) et/ou lesdites une ou plusieurs cales (10, 10a, 10b, 10c) sont façonnées de manière à générer, suite à une pression (P) exercée sur lesdites une ou plusieurs cales (10, 10a, 10b, 10c) vers l'intérieur dudit espace (11), dans une direction d'insertion (60) le long de laquelle elles sont insérées dans ledit espace (11), une force (F1, F2) qui agit entre lesdites une ou plusieurs cales (10, 10a, 10b, 10c) et ladite première et/ou deuxième face plane (80, 90), ayant au moins une composante parallèle audit plan horizontal (6), qui pousse lesdites une ou plusieurs cales (10, 10a, 10b, 10c) vers ladite première face plane (80) et/ou vers ladite deuxième face plane (90).

2. Panneau (1), selon la revendication 1, dans lequel ladite première face plane (80) est inclinée par rapport à ladite direction d'insertion (60), et interagit avec une troisième face plane (101) d'une cale (10, 10a) de ladite ou desdites cales (10, 10a, 10b, 10c), ayant la même inclinaison et la même forme que ladite première face plane (80), l'inclinaison de ladite première face plane (80) et de ladite troisième face plane (101) étant telle qu'elle génère, en conséquence d'un glissement de ladite troisième face plane (101) sur ladite première face plane (80) dû à une pression (P) de ladite cale (10) comprenant ladite troisième face plane (101) vers l'intérieur dudit espace (11), dans ladite direction d'insertion (60), une force (F1) qui pousse ladite cale (10) comprenant ladite troisième face plane (101) vers ladite deuxième face plane (90).

3. Panneau (1), selon la revendication 2, dans lequel ladite deuxième face plane (90) est inclinée, par rapport à ladite direction d'insertion (60), d'une inclinaison opposée à ladite première face (80), et interagit avec une quatrième face plane (102), qui appartient à une cale (10) de ladite ou desdites cales (10, 10a, 10b, 10c), ayant la même inclinaison et la même forme que ladite deuxième face plane (90) et façonnée de manière à générer, du fait d'un glissement de ladite quatrième face plane (102) sur ladite deuxième face plane (90) dû à une pression (P) de ladite cale (10) comprenant ladite quatrième face plane (102) vers l'intérieur dudit espace (11), dans ladite direction d'insertion (60), une force (F2) qui pousse ladite cale (10) comprenant ladite quatrième face plane (102) vers ladite première face plane (80).

4. Panneau (1) selon la revendication 3, dans lequel ladite troisième face plane (101) et ladite quatrième face plane (102) appartiennent à une seule cale (10) parmi lesdites une ou plusieurs cales (10, 10a, 10b, 10c), qui interagit, respectivement, avec ladite première face plane (80) par l'intermédiaire de ladite troisième face plane (101), et avec ladite deuxième face plane (90) par l'intermédiaire de ladite quatrième face plane (102).

5. Panneau (1), selon une ou plusieurs des revendications précédentes, dans lequel lesdites une ou plusieurs cales (10, 10a, 10b, 10c) comprennent une première cale (10a) et une seconde cale (10b), placées dans ledit espace (11) et comprenant respectivement une cinquième face plane (103) et une sixième face plane (104) ayant toutes deux la même forme et la même inclinaison par rapport à ladite direction d'insertion (60), et se faisant face et s'engageant l'une dans l'autre par l'interposition d'un adhésif.

6. Panneau (1), selon la revendication 5, dans lequel ladite cinquième face plane (103) et ladite sixième face plane (104) sont inclinées, par rapport à ladite direction d'insertion (60), de manière à générer, du fait de l'inclinaison desdites cinquième et sixième faces planes (103, 104), en conséquence d'un glissement de ladite cinquième face plane (103) sur ladite sixième face plane (104) dû à une pression (P) de ladite première cale (10a) vers ladite seconde cale (10b) et/ou de ladite seconde cale (10b) vers ladite première cale (10a), vers l'intérieur dudit espace (11), le long de ladite direction d'insertion (60), une force (F1, F2) qui pousse lesdites première et seconde cales (10a, 10b) l'une vers ladite première face plane (80) et l'autre vers ladite deuxième face plane (90).

7. Panneau (1), selon une ou plusieurs des revendications précédentes, comprenant trois ou plus desdites cales (10, 10a, 10b, 10c) couplées deux à deux au moyen de faces planes respectives (103, 104, 105, 106), avec l'interposition dudit adhésif.

8. Panneau (1), selon une ou plusieurs des revendications précédentes, dans lequel ledit élément de support (7) est fabriqué en une seule pièce ou est obtenu par l'assemblage d'une pluralité de parties (7a, 7b) fabriquées dans des matériaux différents ou dans le même matériau, fixés intégralement les uns aux autres.

9. Procédé de fabrication d'un panneau (1) comprenant les étapes suivantes:
- fixer une première feuille (4) et une seconde feuille (5), constituées d'un matériau composite comprenant une charge minérale liée par une matrice polymère, à un élément de support (7) qui maintient lesdites première et seconde feuilles (4, 5) positionnées respectivement avec leur première face externe (40) et leur seconde face externe (50) tournées vers l'extérieur dudit élément de support (7) et posées sur un même plan horizontal (6);
- mettre en place, entre ladite première feuille (4) et ladite seconde feuille (5), un espace (11) défini entre une première face plane (80) de ladite première feuille (4) et une deuxième face plane (90) de ladite seconde feuille (5), espacées et se faisant face;
- disposer une ou plusieurs cales (10, 10a, 10b, 10c), constituées dudit matériau composite comprenant une charge minérale liée par une matrice polymère, façonnées de manière à pouvoir être interposées entre ladite première et ladite deuxième face plane (80, 90), pour fermer dans son ensemble ledit espace (11) avec l'interposition d'un adhésif, ladite première face plane (80) et/ou ladite deuxième face plane (90) et/ou ladite une ou plusieurs cales (10, 10a, 10b, 10c) étant façonnées de manière à générer, sous l'effet d'une pression (P) sur lesdites une ou plusieurs cales (10, 10a, 10b, 10c) vers l'intérieur dudit espace (11), dans une direction d'insertion (60) le long de laquelle elles sont insérées dans ledit espace (11), une force (F1, F2) qui agit entre lesdites une ou plusieurs cales (10, 10a, 10b, 10c) et ladite première et/ou deuxième face plane (80, 90), ayant au moins une composante parallèle audit plan horizontal (6), qui pousse lesdites une ou plusieurs cales (10, 10a, 10b, 10c) vers ladite première face plane (80) et/ou vers ladite deuxième face plane (90);
- positionner lesdites une ou plusieurs cales (10, 10a, 10b, 10c) entre lesdites première et deuxième faces planes (80, 90) de manière à fermer ledit espace (11), avec l'interposition d'un adhésif, en exerçant sur lesdites une ou plusieurs cales (10, 10a, 10b, 10c), pendant un intervalle de temps prédéterminé, une pression (P) vers l'intérieur dudit espace (11), ayant au moins une composante dans ladite direction d'insertion (60), de manière à générer entre lesdites une ou plusieurs cales (10, 10a, 10b, 10c) et lesdites première et deuxième faces planes (80, 90) une force (F1, F2) ayant au moins une composante parallèle audit plan horizontal (6), qui pousse lesdites une ou plusieurs cales (10, 10a, 10b, 10c) vers ladite première face plane (80) et/ou vers ladite deuxième face plane (90).

10. Procédé selon la revendication 9, **caractérisé en ce que** ladite étape de mise en place, entre ladite première feuille (4) et ladite seconde feuille (5), d'un espace (11) défini entre une première face plane (80) de ladite première feuille (4) et une deuxième face plane (90) de ladite seconde feuille (5), espacées et se faisant face, comprend l'obtention de ladite première face plane (80) et/ou de ladite deuxième face plane (90) au moyen d'un enlèvement de matière de ladite première feuille (4) et/ou de ladite deuxième feuille (5), après que ladite première feuille (4) et ladite seconde feuille (5) aient été fixées sur ledit élément de support (7).

11. Procédé selon la revendication 9 ou 10, comprenant l'étape consistant à recouvrir une surface latérale (70c) dudit élément de support (7) d'un ou de plusieurs autres éléments décoratifs et/ou protecteurs.
